# EUROPEAN PATENT SPECIFICATION

(11) **EP 3 360 007 B1**
(45) Date of publication and mention of the grant of the patent: **16.12.2020**
(21) Application number: 15905938.5
(22) Date of filing: 07.10.2015
(51) Int. Cl.: C09K 9/02, G02F 1/1516

(54) **ELECTROCHROMIC COMPOSITION AND ELECTROCHROMIC DEVICE USING SAME**
ELEKTROCHROME ZUSAMMENSETZUNG UND ELEKTROCHROME VORRICHTUNG DAMIT
COMPOSITION ÉLECTROCHROMIQUE ET DISPOSITIF ÉLECTROCHROMIQUE L'UTILISANT

(43) Date of publication of application: 15.08.2018
(73) Proprietor: IGLASS TECHNOLOGY, INC., Irvine, CA 92618 (US)
(72) Inventor: VASILIEV, Evgeniy Vladimirovich, Novosibirks 630090 (RU); BORISOV, Sergey, Olegovich, Novosibirsk 630090 (RU); ZAIKIN, Pavel Anatolievich, Novosibirsk 630090 (RU); KRUGLIKOV, Nikita, Valerievich, Novosibirsk 630090 (RU)
(74) Representative: Sandri, Sandro
(86) International application number: PCT/US2015/054335
(87) International publication number: WO 2017/061995

(56) References cited:
- EP-A1- 2 848 667
- EP-A1- 2 848 669
- US-A- 6 020 987
- US-A1- 2002 051 278
- US-A1- 2002 145 790
- US-A1- 2006 050 357
- US-A1- 2006 103 911
- US-A1- 2009 225 393

## Description

### BACKGROUND OF THE INVENTION

### Field of the Invention

The disclosed embodiments relate in general to the field of applied electrochemistry, and in particular to electrochromic compositions used in devices with electrically controlled absorption of light such as light filters of variable optical density, light emission modulators, and information image displays.

### Description of the Related Art

Electrochromism is a physical phenomenon found in certain compositions of reversibly changing predetermined optical properties such as color or light transmittance with an application of an electrical voltage, called a control voltage. Electrochromism provides the basis for operation of various electrochromic devices, such as smart glass, well known to persons of ordinary skill in the art. Various types of optical materials and structures can be used to construct the aforesaid compounds with electrochromic properties, with the specific structures being dependent on the specific purpose or application of the electrochromic device.

Known in the art are electrochromic compositions based on quaternary salts of dipyridine. One such electrochromic composition is a composition comprising a 1,1'-dibenzyl-4,4'-dipyridinium diperchlorate; 1,1'-diethylferrocene; a copolymer of methylmethacrylate and acrylic acid; and propylene carbonate. A major disadvantage of compositions of this type is a low rate of change in light transmittance under the effect of applied voltage, causing problems to occur in the manufacturing of coatings for use on large surface areas. In addition, the electrochromic composition of the aforesaid type are able to be colored only in blue color.

Therefore, new and improved electrochromic compositions are needed that would not be subject to the above deficiencies of the conventional technology.

Document EP 2848667 A1 discloses electrochromic materials based on either single or two-core viologen systems and the use of these viologen systems as a variable transmittance medium for the manufacture of an optical article, such as an ophthalmic lens.

Document EP 2848669 A1 discloses an electrochromic composition comprising at least one reducing compound and at least two oxidizing compounds, said at least two oxidizing compounds having similar oxydo-reduction potentials. More specifically, said at least two oxidizing compounds are selected from viologen derivatives. Said composition can be used as a variable transmittance medium for the manufacture of an optical article, such as an ophthalmic lens.

Document US 2006/050357 A1 discloses a method for producing an electrochromic device, in particular having a large working surface area and which does not produce a volumetric shrinkage and can operate during a long maintenance of electrocoloured state of an electrochromic compound, high control voltages and polarity inversion. The electrochromic device comprises at least two electrodes, at least one of them being optically transparent. A closed sealed space is formed between said electrodes and filled with the electrochromic compound which is embodied in the form of a solid-like film.

Document US 6020987 A discloses an electrochromic device incorporating an electrochromic medium that comprises at least three electroactive materials having absorption spectra that add together such that the color of the electrochromic medium can be pre-selected by individually choosing the concentrations of the at least three electroactive materials. The electrochromic medium generally maintains the pre-selected perceived color throughout its normal range of voltages when used in an electrochromic device. The at least three electroactive materials include at least one electrochemically reducible material (cathodic material), at least one electrochemically oxidizable material (anodic material) and at least one additional electroactive material which may be either an anodic or cathodic material.

### SUMMARY OF THE INVENTION

The present invention relates to an electrochromic composition comprising a cathodic component in the form of a quaternary salt of dipyridine, an anodic component in the form of a ferrocene derivative or heterocyclic compound capable of switching between two oxidation states, a polymeric thickener and a solvent, wherein the cathodic component comprises a salt of cation of 1,1'-dialkyl-4,4'-dipyridinium (alkyl group) and 1,1-(alkane-alpha (alkane spacer), omega-diyl)-bis-(1'-alkyl-4,4'-dipyridinium) with weakly coordinated anions, as described at claim 1.

The dependent claims outline advantageous forms of embodiment of this electrochromic composition.

Furthermore, the invention relates to an electrochromic device comprising said electrochromic composition.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

### BRIEF DESCRIPTION OF THE DRAWINGS

The accompanying drawings, which are incorporated in and constitute a part of this specification exemplify the embodiments of the present invention and, together with the description, serve to explain and illustrate principles of the inventive technique. Specifically:

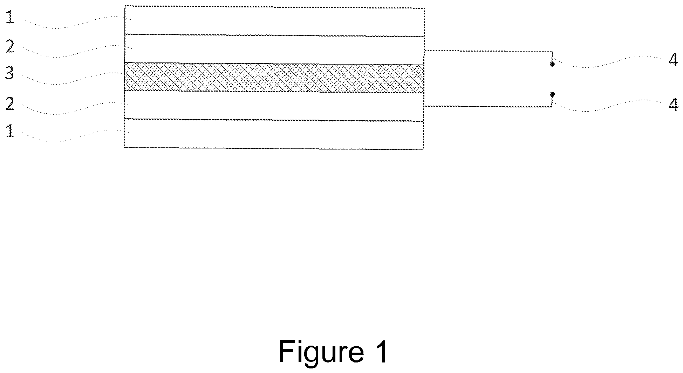

Fig. 1 illustrates an exemplary application of an embodiment of the described composition in electrochromic devices such as light-modulating devices, automotive glass or mirrors, windows of buildings or any other transparent or reflective surfaces.

### DETAILED DESCRIPTION

In the following detailed description, reference will be made to the accompanying drawing(s), in which identical functional elements are designated with like numerals. The aforementioned accompanying drawings show by way of illustration, and not by way of limitation, specific embodiments and implementations consistent with principles of the present invention.

In accordance with one aspect of the embodiments described herein, there are provided novel electrochromic compositions for use in devices with electrically controlled (voltage-controlled) absorption of light such as light filters of variable optical density, light emission modulators, and information image displays. Various embodiments of the described electrochromic compositions may be used, for example, in construction industry for creating variably light-transmitting coatings of buildings capable of controlling indoor microclimate by regulating the flow of natural light. Specifically, described is an exemplary embodiment of an organic electrochromic composition manufactured based on biocompatible and biodegradable components. The described exemplary electrochromic composition is characterized by an increased service life as well as a high rate of light-transmittance change in response to the predetermined variation of the controlled voltage. In addition, the described novel manufacturing techniques enable preparing electrochromic compositions in a wide range of light-absorption spectra and coating colors.

In one or more embodiments not forming part of the present invention, there is provided an electrochromic composition comprising a cathodic component such as 1,1'-dialkyl-4,4'-dipyridinium with anions of BF4-, PF6-, ClO4-, CF3SO3- or (CF3SO2)2N-; an anodic component such as 0.3 to 3.0% of 5,10-dihydrophenazine derivative; an electrode reaction accelerator additive such as 0.5 % of a lithium or tetraalkylammonium salt with anions of BF4-, PF6-, ClO4-, CF3SO3- or (CF3SO2)2N-; 30-45 % a polymer thickener in the form of methyl methacrylate or its copolymer with acrylic and methacrylic acid or its salts, polyvinyl acetate, a polylactic acid, or poly-3-hydroxybutyrate or its copolymers; and a solvent such as propylene carbonate, gamma-butyrolactone, gamma-valerolactone, N-methylpyrrolidone or di-, tr- polyethylene glycols or their esters as the balance.

Specifically, in one exemplary embodiment not forming part of the present invention, the electrochromic composition comprises a cathodic component in the form of 1,1'-dialkyl-4,4'-dipyridinium with complex fluoride anions such as BF4-, PF6-, and organic anions such as CF3SO3- or (CF3SO2)2N-; an anodic component in the form of a 5,10-dihydrophenazine derivative; and a solvent such as propylene carbonate, gamma-butyrolactone, gamma-valerolactone, N-methylpyrrolidone or di-, tr-polyethylene glycols or their esters; as well as polymers in the form of methyl methacrylate or its copolymer with acrylic and methacrylic acid or its salts, polyvinyl acetate, a polylactic acid, or poly-3-hydroxybutyrate or its copolymers; the components being used in the following mass percentage quantities: 0.3 to 3.2% of the cathodic component in the form of 1,1'-dimethyl-4,4'-dipyridinium with anions such as BF4-, PF6-, CF3SO3- or (CF3SO2)2N- or 0.5 to 4.4 of 1,1'- dibenzyl-4,4'-dipyridine with anions BF4-, PF6-, CF3SO3- or (CF3SO2)2N-; 0.3 to 3.0% of the anodic component in the form of a 5,10-dihydrophenazine derivative; 30 to 45% of the polymer thickener and the balance being a solvent. The described exemplary electrochromic composition is characterized by the substitution of anodic component to prepare green-tinted film.

Specifically, in one exemplary embodiment not forming part of the present invention, the electrochromic composition comprises a cathodic component in the form of 1,1-(alkane-alpha, omega-diyl)-bis-(1'-alkyl-4,4'-dipyridinium) salt with complex fluoride anions such as BF4-, PF6-, and organic anions such as CF3SO3- or (CF3SO2)2N-; an anodic component in the form of a ferrocene derivative; and a solvent such as propylene carbonate, gamma-butyrolactone, gamma-valerolactone, N-methylpyrrolidone or di-, tr- polyethylene glycols or their esters; as well as polymers in the form of co-polymer of methyl metacrylate metacrylic acid and its calcium salt; the components being used in the following mass percentage quantities: 0.3 to 3.2% of the cathodic component in the form of 1,1-(propane-1,3-diyl)-bis-(1'-alkyl-4,4'-dipyridinium) with anions such as BF4- or 0.5 to 4.4 of 1,1-(butane-1,4-diyl)-bis-(1'-alkyl-4,4'-dipyridinium) with anions BF4-; 0.3 to 3.0% of the anodic component in the form of a ferrocene derivative; 30 to 45% of the polymer thickener and the balance being a solvent. The described electrochromic composition is characterized by the substitution of cathodic component to prepare violet-tinted film.

Specifically, in one exemplary embodiment not forming part of the present invention, the electrochromic composition comprises a cathodic component in the form of 1,1-(alkane-alpha, omega-diyl)-bis-(1'-alkyl-4,4'-dipyridinium) salt with complex fluoride anions such as BF4-, PF6-, and organic anions such as CF3SO3- or (CF3SO2)2N-; an anodic component in the form of a 5,10-dihydrophenazine derivative; and a solvent such as propylene carbonate, gamma-butyrolactone, gamma-valerolactone, N-methylpyrrolidone or di-, tr- polyethylene glycols or their esters; as well as polymers in the form of co-polymer of methyl metacrylate metacrylic acid and its calcium salt; the components being used in the following mass percentage quantities: 0.3 to 3.2% of the cathodic component in the form of 1,1-(propane-1,3-diyl)-bis-(1'-alkyl-4,4'-dipyridinium) with anions such as BF4- or 0.5 to 4.4% of 1,1-(butane-1,4-diyl)-bis-(1'-alkyl-4,4'-dipyridinium) with anions BF4-; 0.3 to 3.0% of the anodic component in the form of a 5,10-dihydrophenazine derivative; 30 to 45% of the polymer thickener and the balance being a solvent. The described electrochromic composition is characterized by the substitution of cathodic and anodic component to prepare brown-tinted film.

According to the present invention, the electrochromic composition comprises a cathodic component in the form of mixture of 1,1'-dialkyl-4,4'-dipyridinium with complex fluoride anions such as BF4-, PF6-, and organic anions such as CF3SO3- or (CF3SO2)2N- and 1,1-(alkane-alpha, omega-diyl)-bis-(1'-alkyl-4,4'-dipyridinium) salt with complex fluoride anions such as BF4-, PF6-, and organic anions such as CF3SO3- or (CF3SO2)2N-; an anodic component in the form of a 5,10-dihydrophenazine derivative; and a solvent such as propylene carbonate, gamma-butyrolactone, gamma-valerolactone, N-methylpyrrolidone or di-, tr- polyethylene glycols or their esters; as well as polymers in the form of co-polymer of methyl metacrylate metacrylic acid and its calcium salt; the components being used in the following mass percentage quantities: 0.1 to 1.2% of the cathodic component in the form of 1,1-(propane-1,3-diyl)-bis-(1'-alkyl-4,4'-dipyridinium) with anions such as BF4- or 0.5 to 4.4% of 1,1-(butane-1,4-diyl)-bis-(1'-alkyl-4,4'-dipyridinium) with anions BF4-; 0.2 to 2.4% of the cathodic component in the form of 1,1'-dimethyl-4,4'-dipyridinium with anion BF4-; 0.3 to 3.0% of the anodic component in the form of a 5,10-dihydrophenazine derivative; 30 to 45% of the polymer thickener and the balance being a solvent. The described electrochromic composition is characterized by the substitution of cathodic and anodic component to prepare black-tinted film.

In one or more embodiments, the additives comprise antioxidants including, without limitation, polyphenols, sterically hindered phenols, and/or ionol; and UV filters such as benzophenones and triazines and cinnamates.

It should be noted that modification of the described components imparts to the composition new properties, i.e., improved service life and increased rate of variation of light transmittance with application of the control voltage different tinting colors and the ability to change the film color depending on the voltage applied.

In one or more embodiments, an electrochromic device for testing of the compositions consisted of two polymer films coated on their inner sides with semiconductor coatings of ITO (indium-tin oxide) films with doping additives or films coated with current conductive metal meshes. The distance between the films in the device was determined by the thickness of the inert filler introduced into the electrochromic composition for maintaining a constant thickness of the electrochromic layer. The electrochromic composition was introduced between the films, and then both films were bonded to one another over the perimeter.

Certain specific examples of the application of the described electrochromic composition will now be described.

### Example 1 (Reference example)

A first exemplary composition was prepared by dissolving 1,1'-dimethyl-4,4'-dipyridinium bis(tetrafluoroborate) to a concentration of 1.2% and 5,10-dimethyl-5,10-dihydrophenazine to a concentration of 0.8%, as well as a copolymer of methyl methacrylate and methacrylic acid and calcium salt of methacrylic acid to a concentration of 35% in propylene carbonate. The resulting composition was used for constructing an electrochromic device having the thickness of the inter-electrode spacing being 100 µm. In the initial state, the composition had a light greenish color. When voltage of 1,5 V was applied, the color turned dark green. Initial transmittance was 70%. The electrochromic device was tested for 8 hours per day under the following conditions: coloring for 30 seconds at U = 1,5 V and discoloration for 30 seconds by circuiting the electrodes. After 3 and 6 months of work in a non-colored state, the light transmittance was 65% and 61%, respectively.

### Example 2 (Reference example)

A second exemplary composition was prepared by dissolving 1,1-(butane-1,4-diyl)-bis-(1'-alkyl-4,4'-dipyridinium) tetrakis(tetrafluoroborate) to concentration of 1%, 5,10-dimethyl-5,10-dihydrophenazine to a concentration of 0,5%, and a copolymer of methylacrylate and acrylic acid to a concentration of 35% in propylene carbonate. The resulting composition was used for filling a 100-µm interelectrode space of the electrochromic device. In the initial state, the composition was practically colorless. When voltage of 1,5 V was applied, the color turned brown. Initial transmittance was 78%. The electrochromic device was tested for 8 hours per day under the following conditions: coloring for 30 seconds at U = 1,5 V and discoloration for 30 seconds by circuiting the electrodes. After 3 and 6 months of work in a noncolored state, transmittance was 75% and 69%, respectively.

### Example 3 (Reference example)

A third exemplary composition was prepared by dissolving 1,1-(butane-1,4-diyl)-bis-(1'-alkyl-4,4'-dipyridinium) tetrakis(tetrafluoroborate) to a concentration of 1%, ferrocene to a concentration of 0,5%, and copolymer of methylacrylate and acrylic acid and 0.5% of its calcium salt to a concentration of 35% in propylene carbonate. The resulting composition was used for filling a 100-µm interelectrode space of an electrochromic device. In the initial state, the composition was slightly yellow. When voltage of 1 V was applied, the color turned blue, when voltage increased to 1,5 V composition became deep violet. Initial transmittance was 77%. The electrochromic device was tested for 8 hours per day under the following conditions: coloring for 30 seconds at U = 1,5 V and discoloration for 30 seconds by circuiting the electrodes. After 3 and 6 months of work in a noncolored state, transmittance was 73% and 65%, respectively.

### Example 4.

A forth exemplary composition was prepared by dissolving 1,1-(butane-1,4-diyl)-bis-(1'-alkyl-4,4'-dipyridinium) tetrakis(tetrafluoroborate) to a concentration of 0,5%, 1,1'-dimethyl-4,4'-dipyridinium bis(tetrafluoroborate) to a concentration of 1.2% and 5,10-dimethyl-5,10-dihydrophenazine to a concentration of 1% and copolymer of methylacrylate and acrylic acid and 0.5% of its calcium salt to a concentration of 35% in propylene carbonate. The resulting composition was used for filling a 100-µm interelectrode space of an electrochromic device. In the initial state, the composition was practically colorless. When voltage of 1,5 V was applied composition turns black. Initial transmittance was 77%. The electrochromic device was tested for 8 hours per day under the following conditions: coloring for 30 seconds at U = 1,5 V and discoloration for 30 seconds by circuiting the electrodes. After 3 and 6 months of work in a noncolored state, transmittance was 74% and 69%, respectively.

In one or more embodiments, the upper limit of concentrations was determined by solubility of quaternary salts of dipyridine in the solvent used, and the lower limit was defined by the minimal value of light absorption in an electrically colored state at which it became unsuitable for practical use. Furthermore, the proposed composition comprises an additive that accelerates electrode reaction and thus shortens switching time of the device.

The embodiments of the electrochromic composition described herein have a prolonged service life, during which the main optical light characteristic, i.e., light transmittance, is preserved.

Fig. 1 illustrates an exemplary application of an embodiment of the described composition in electrochromic devices such as light-modulating devices, automotive glasses or mirrors, or windows of buildings or any other transparent or reflective surfaces.

In the exemplary embodiment illustrated in Fig. 1, the described electrochromic composition (3) is embodied as a layer (3) of an arbitrary thickness located between two transparent conductive layers (2). The thickness of the electrochromic layer is defined by the specific use and may range from 25 µm to 200 µm. Transparent conductive layers (2) are arranged on a substrate (1), which functions as a protective and fixing layer. Control voltage is supplied to the transparent electrically conductive layers (4) by wires or loops.

## Claims

1. An electrochromic composition comprising a cathodic component in the form of a quaternary salt of dipyridine, an anodic component in the form of a ferrocene derivative or heterocyclic compound capable of switching between two oxidation states, a polymeric thickener and a solvent, wherein the cathodic component comprises a salt of cation of 1,1'-dialkyl-4,4'-dipyridinium (alkyl group) and 1,1-(alkane-alpha (alkane spacer), omega-diyl)-bis-(1'-alkyl-4,4'- dipyridinium) with weakly coordinated anions.

2. The electrochromic composition of claim 1, wherein the alkyl group is selected from C1-C8 saturated alkyl.

3. The electrochromic composition of claim 1, wherein the alkane spacer is selected from a C3-C5 alkane chain.

4. The electrochromic composition of claim 1, wherein the anion of quaternary salt is non-nucleophilic and is selected from BF4-, PF6-, ClO4-, CF3SO3- or (CF3SO2)2N- or (CF3SO2)3C-.

5. The electrochromic composition of claim 1, wherein the polymeric thickener comprises a methyl methacrylate or its copolymer with acrylic and methacrylic acid or its salts, polyvinyl acetate, a polylactic acid, or poly-3-hydroxybutyrate or its copolymers.

6. The electrochromic composition of claim 1, wherein the solvent comprises propylene carbonate, gamma-butyrolactone, gamma-valerolactone, N-methylpyrrolidone or di -, tri - polyethylene glycols or their esters.

7. The electrochromic composition of claim 1 comprising on a mass percentage bases between 0,4% and 3,6% of the cathodic component, between 30% and 45% of polymer thickener, between 0,3 and 3,0% of the anodic component and the balance being the solvent.

8. The electrochromic composition of claim 1, further comprising at least one antioxidant.

9. The electrochromic composition of claim 8, wherein the at least one antioxidant comprises a polyphenol.

10. The electrochromic composition of claim 8, wherein the at least one antioxidant comprises a sterically hindered phenol.

11. The electrochromic composition of claim 8, wherein the at least one antioxidant comprises an ionol.

12. The electrochromic composition of claim 1, further comprising an ultraviolet filter.

13. The electrochromic composition of claim 12, wherein the ultraviolet filter comprises a benzophenone.

14. The electrochromic composition of claim 12, wherein the ultraviolet filter comprises a cinnamate.

15. An electrochromic device comprising an electrochromic composition according to any one of claims 1-14.

## Patentansprüche

1. Elektrochrome Zusammensetzung, die eine kathodische Komponente in Form eines quaternären Salzes von Dipyridin umfasst, eine anodische Komponente in Form eines Ferrocenderivats oder einer heterocyclischen Verbindung, die in der Lage ist, zwischen zwei Oxidationsstufen umzuschalten, ein polymeres Verdickungsmittel und ein Lösemittel, wobei die kathodische Komponente ein Kationensalz von 1,1'-Dialkyl-4,4'-dipyridinium (Alkylgruppe) und 1,1- (Alkan-alpha (Alkan-Spacer), Omega-Diyl) -bis- (1'-alkyl-4,4'-dipyridinium) mit schwach koordinierten Anionen umfasst.

2. Elektrochrome Zusammensetzung nach Anspruch 1, wobei die Alkylgruppe ausgewählt ist aus gesättigtem C1-C8 Alkyl.

3. Elektrochrome Zusammensetzung nach Anspruch 1, wobei der Alkan-Spacer ausgewählt ist aus einer C3-C5 Alkankette.

4. Elektrochrome Zusammensetzung nach Anspruch 1, wobei das Anion des quaternärem Salzes nicht nukleophil ist und ausgewählt ist aus BF4-, PF6-, CIO4-, CF3SO3- oder (CF3SO2)2N- oder (CF3SO2)3C-.

5. Elektrochrome Zusammensetzung nach Anspruch 1, wobei das polymere Verdickungsmittel ein Methylmethacrylat oder sein Copolymer mit Acryl- und Methacrylsäure oder seine Salze, Polyvinylacetat, eine Polymilchsäure oder Poly-3-hydroxybutyrat oder seine Copolymere umfasst.

6. Elektrochrome Zusammensetzung nach Anspruch 1, wobei das Lösemittel Propylencarbonat, Gamma-Butyrolacton, Gamma-Valerolacton, N-Methylpyrrolidon oder Di-, Tripolyethylenglykole oder deren Ester umfasst.

7. Elektrochrome Zusammensetzung nach Anspruch 1, die auf Massenprozentbasis zwischen 0,4 % und 3,6 % der kathodischen Komponente, zwischen 30 % und 45 % des polymeren Verdickungsmittels, und zwischen 0,3 und 3,0 % der anodischen Komponente umfasst, wobei der Rest Lösungsmittel ist.

8. Elektrochrome Zusammensetzung nach Anspruch 1, die ferner mindestens ein Antioxidationsmittel umfasst.

9. Elektrochrome Zusammensetzung nach Anspruch 8, wobei das mindestens eine Antioxidationsmittel ein Polyphenol umfasst.

10. Elektrochrome Zusammensetzung nach Anspruch 8, wobei das mindestens eine Antioxidationsmittel ein sterisch gehindertes Phenol umfasst.

11. Elektrochrome Zusammensetzung nach Anspruch 8, wobei das mindestens eine Antioxidationsmittel ein Ionol umfasst.

12. Elektrochrome Zusammensetzung nach Anspruch 1, die ferner einen Ultraviolett-Filter umfasst.

13. Elektrochrome Zusammensetzung nach Anspruch 12, wobei der Ultraviolett-Filter ein Benzophenon umfasst.

14. Elektrochrome Zusammensetzung nach Anspruch 12, wobei der Ultraviolett-Filter ein Cinnamat umfasst.

15. Elektrochrome Vorrichtung, die eine elektrochrome Zusammensetzung nach einem der Ansprüche 1 bis 14 umfasst.

## Revendications

1. Composition électrochromique comprenant un composant cathodique sous la forme d'un sel quaternaire de dipyridine, un composant anodique sous la forme d'un dérivé de ferrocène ou d'un composé hétérocyclique capable de changer entre deux états d'oxydation, un épaississant polymère et un solvant, dans laquelle le composant cathodique comprend un sel de cation du 1,1'-dialkyl-4,4'- dipyridinium (groupe alkyle) et du 1,1-(alcane-alpha (espaceur alcane), oméga-diyl)-bis-(1'-alkyl-4,4'- dipyridinium) avec des anions faiblement coordonnés.

2. Composition électrochromique selon la revendication 1, dans laquelle le groupe alkyle est choisi parmi les alkyles saturés en C1-C8.

3. Composition électrochromique selon la revendication 1, dans laquelle l'espaceur alcane est choisi parmi une chaine alcane en C3-C5.

4. Composition électrochromique selon la revendication 1, dans laquelle l'anion de sel quaternaire est non nucléophile et est choisi parmi BF4-, PF6-, ClO4-, CF3SO3- ou (CF3SO2)2N- ou (CF3SO2)3C-.

5. Composition électrochromique selon la revendication 1, dans laquelle l'épaississant polymère comprend un méthacrylate de méthyle ou son copolymère avec l'acide acrylique et l'acide méthacrylique ou ses sels, de l'acétate de polyvinyle, un acide polylactique, ou du poly-3-hydroxybutyrate ou ses copolymères.

6. Composition électrochromique selon la revendication 1, dans laquelle le solvant comprend du carbonate de propylène, de la gamma-butyrolactone, de la gamma-valérolactone, de la N-méthylpyrrolidone ou des di-, tri-polyéthylèneglycols ou leurs esters.

7. Composition électrochromique selon la revendication 1, comprenant, sur la base d'un pourcentage en masse, entre 0,4 % et 3,6 % de composant cathodique, entre 30 % et 45 % d'épaississant polymère, entre 0,3 % et 3,0 % de composant anodique, le reste étant le solvant.

8. Composition électrochromique selon la revendication 1, comprenant en outre au moins un antioxydant.

9. Composition électrochromique selon la revendication 8, dans laquelle le au moins un antioxydant comprend un polyphénol.

10. Composition électrochromique selon la revendication 8, dans laquelle le au moins un antioxydant comprend un phénol à empêchement stérique.

11. Composition électrochromique selon la revendication 8, dans laquelle le au moins un antioxydant comprend un ionol.

12. Composition électrochromique selon la revendication 1, comprenant en outre un filtre ultraviolet.

13. Composition électrochromique selon la revendication 12, dans laquelle le filtre ultraviolet comprend une benzophénone.

14. Composition électrochromique selon la revendication 12, dans laquelle le filtre ultraviolet comprend un cinnamate.

15. Dispositif électrochromique comprenant une composition électrochromique selon l'une quelconque des revendications 1 à 14.
